# FASCICULE DE BREVET EUROPEEN

(11) **EP 0 538 124 B1**
(45) Date de publication et mention de la délivrance du brevet: **28.08.1996**
(21) Numéro de dépôt: 92402809.5
(22) Date de dépôt: 14.10.1992
(51) Int. Cl.: H05B 6/44, H05B 6/02, C21D 1/42

(54) **Inducteur de chauffage par induction de bandes métalliques**
Induktionsanordnung zum Heizen von Metallbändern
Inductor assembly for heating metal strip

(30) Priorité: 14.10.1991 FR 9112627
(43) Date de publication de la demande: 21.04.1993
(60) Demande divisionnaire: 95114697.6
(73) Titulaire: ELECTRICITE DE FRANCE Service National, F-75008 Paris (FR)
(72) Inventeur: Ferry, Georges Charles, Résidence l'Hermitage, F-78230 Le Pecq (FR); Peureux, Jean-Louis Bernard, F-89140 Villethierry (FR); Roehr, Philippe, F-68360 Soultz (FR); Delassus, Jean, F-95160 Montmorency (FR)
(74) Mandataire: Polus, Camille

(56) Documents cités:
- EP-A- 0 194 708
- FR-A- 1 193 496
- GB-A- 2 184 927
- US-A- 2 583 227
- US-A- 3 489 875
- US-A- 3 649 804
- PATENT ABSTRACTS OF JAPAN vol. 15, no. 76 (C-809)21 Février 1991

## Description

La présente invention concerne les traitements par un dispositif de chauffage par induction de bandes métalliques en défilement en vue d'un traitement thermique ou de revêtement ; le revêtement peut être métallique (refusion d'étain, zinc) ou organique (cuisson de vernis ou de peinture). Le chauffage par induction, du fait de ses qualités intrinsèques (propreté, rapidité, souplesse) est une technique particulièrement bien adaptée au traitement en continu des bandes métalliques. C'est pourquoi le chauffage par induction est mis en oeuvre pour le traitement de revêtement ou métallique ou organique de bandes métalliques, en particulier de l'acier.

Dans le cas du chauffage des aciers magnétiques, en particulier, les inducteurs mis en oeuvre engendrent principalement un champ magnétique longitudinal parallèle au sens de défilement de la bande métallique. La fréquence de fonctionnement des inducteurs dépend des caractéristiques électriques, magnétiques et géométriques de la bande de métal ainsi que de la densité de puissance pour les matériaux magnétiques. Les inducteurs sont cosntitués par une bobine en forme d'hélice aplatie de plusieurs spires alimentée par un convertisseur de fréquence.

Une telle bobine d'induction engendre un champ magnétique comportant une composante longitudinale importante, mais malheureusement, elle crée également une composante transversale. La première composante longitudinale engendre des courants induits qui circulent dans l'épaisseur de la bande perpendiculairement au sens de défilement et qui la chauffent. La composante transversale engendre des courants dits de fuites qui prennent naissance dans la bande, la parcourent initialement dans le sens de défilement de la bande et qui cherchent à retourner au point de départ en empruntant tous les chemins possibles (cylindre, carcasse métallique...).

Si dans le trajet de ces courants de fuites, on interpose un isolant, par exemple une couche de peinture ou de vernis, on fait alors apparaître une tension dont le niveau peut provoquer la destruction de cet isolant. Ce phénomène connu sous le nom de phénomène d'étincelage est particulièrement nuisible à la qualité des peintures ou vernis qui lui sont déposés sur la bande métallique.

En ce qui concerne les revêtements conducteurs, c'est-à-dire métalliques, il n'y a pas de dégradation de la qualité car les courants peuvent s'écouler librement; par contre ils peuvent endommager certaines pièces, telles que les roulements des cylindres de guidage de la bande, par exemple. En ce qui concerne les revêtements organiques, on peut avoir recours à l'emploi d'un système de guidage fortement isolé (cylindre monté sur cale ou revêtu d'une matière plastique).

Pour les installations de traitement polyvalentes l'emploi de cylindres métalliques est un impératif. Dans ce dernier cas, on peut placer sur les rives de la bande en amont et en aval de l'iducteur des collecteurs de manière à localiser les défauts. Malheureusement ce système conduit à fabriquer une bande de moindre qualité puisque ses rives sont mises à nu et il n'est pas d'une grande fiabilité puisque des claquages de peinture en "pleine peau" sont à craindre.

L'origine des courants de fuites est la composante transversale du champ magnétique créé par l'inducteur. Ce dernier présente en section la forme d'un rectangle allongé entourant la bande métallique à traiter et comporte des spires droites qui sont reliées entre elles par une connexion oblique disposée sur le côté de la spire.

Il est désirable d'éliminer les courants de fuites pour améliorer les performances des intallations de traitement de revêtement et en particulier pouvoir disposer d'installations polyvalentes. C'est pourquoi la présente invention se propose de fournir un inducteur de chauffage par induction de bandes métalliques en défilement qui permet d'éliminer les courants de fuites indésirables.

A cet effet, la présente invention a pour objet un inducteur de chauffage par induction de bandes métalliques en défilement en vue d'un traitement de revêtement, constitué par une bobine en hélice aplatie, comprenant des spires raccordées entre elles par une connexion oblique disposée sur un petit côté de la bobine et entourant la bande métallique en défilement, caractérisé en ce que l'on prévoit des moyens de suppression de la composante transversale du champ magnétique créé par ladite bobine, la bobine étant constituée par des spires formant une double hélice imbriquée.

Du fait que l'invention permet de supprimer la composante transversale du champ magnétique, les courants de fuites disparaissent et les inconvénients précités ne se produisent plus.

Grâce à cette disposition, les effets créés par chacune des connexions obliques s'éliminent deux par deux.

Selon encore un autre mode de réalisation de l'invention, la bobine est constituée de deux bobines symétriques à sens de bobinage opposés.

Là encore, les effets néfastes des connexions obliques sont compensés deux par deux.

D'autres caractéristiques et avantages de l'invention ressortiront de la description qui suit d'exemples de réalisation de l'invention, faite en se référant au dessins annexés sur lesquels :
- la figure 1 est une vue schématique en perspective d'une installation de traitement de revêtement de bandes métalliques utilisant un chauffage par induction;
- la figure 2 présente une bobine d'induction de type classique ;
- la figure 3 illustre un mode de réalisation de l'invention ;
- la figure 4 illustre un dispositif utilisant deux bobines à sens de bobinage opposés.
- la figure 5 représente un premier mode de connexion des bobines de la figure 4; et
- la figure 6 représente un deuxième mode de connexion des bobines de la figure 4.

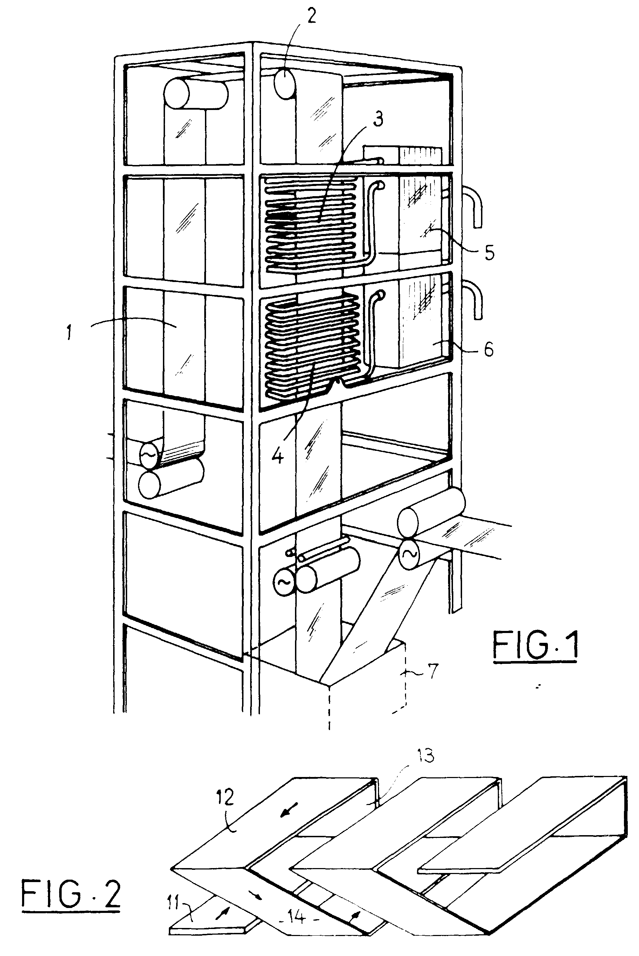

La figure 1 représente schématiquement en perspective une installation de traitement de revêtement d'une bande métallique en défilement qui utilise un dispositif de chauffage par induction. La bande métallique 1 pénètre dans l'installation du côté droit, elle est amnée jusqu'à un cylindre de guidage 2 qui peut également constituer un cylindre de refroidissement. Elle traverse ensuite un ensemble de chauffage par induction qui, dans l'exemple représenté, comporte deux bobines d'induction successives 3 et 4 qui sont alimentées chacune par un convertisseur de fréquence 5, respectivement 6. La bande chauffée passe ensuite dans un dispositif de traitement schématisé par un bain 7.

La figure 2 représente en perspective une des bobines d'induction. Elle est constituée d'une bande métallique qui est bobinée de manière à réaliser une hélice aplatie. Dans l'exemple représenté, la bobine comporte trois spires qui sont alimentées en courant à haute fréquence du côté gauche, le courant sortant du côté droit, la circulation du courant étant symbolisée par des petites flèches.

On voit que chaque spire comporte deux grands côtés 11 et 12 et un petit côté perpendiculaire 13 ; les spires voisines sont reliées entre elles par une connexion oblique 14. C'est l'ensemble de ces connexions obliques 14 qui engendre la composante transversale du champ magnétique.

L'invention se propose d'annuler cette composante transversale.

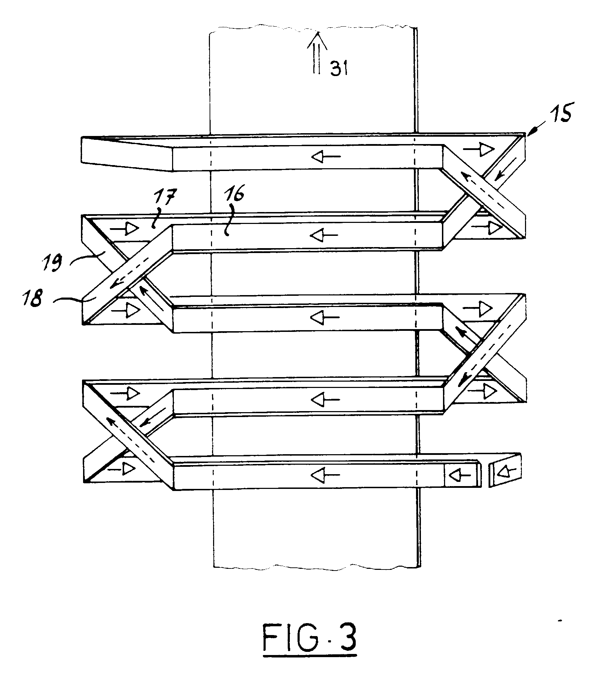

La figure 3 représente une bobine d'induction selon l'invention. Dans ce cas, la bande métallique 31 se déplace dans un inducteur constitué par une double hélice imbriquée 15. Les deux hélices comportent des spires 16,17 reliées par des connexions obliques 18,19 et la deuxième hélice est bobinée en sens inverse de la première de telle sorte que la borne de sortie de la deuxième hélice se trouve au niveau de la borne d'entrée de la première.

On voit que les connexions obliques de la première hélice se croisent avec les connexions obliques de la seconde hélice de telle sorte que la composante transversale du champ magnétique se trouve annulée.

En fait, on peut considérer que chaque spire est constituée par une longueur de la première hélice et une longueur de la seconde hélice. Compte tenu des symétries nécessaires dans cette disposition, le nombre des spires est égal 4n + 1, n étant un nombre entier. Si on tolère une légère dissymétrie, il est possible de s'écarter de la condition 4n + 1 ; toutefois il faudra que le nombre de spires soit important (par exemple supérieur à 7).

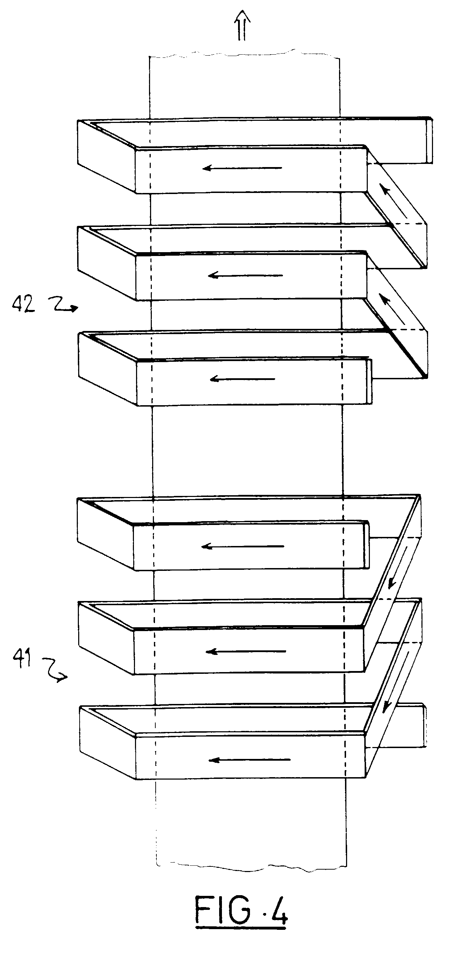

La figure 4 représente un dispositif dans lequel on utilise deux bobines disposées l'une à la suite de l'autre. Une première bobine 41 est bobinée dans un premier sens et la deuxième bobine 42 est bobinée en sens inverse. Ces deux bobines peuvent être connectées en série ou en parallèle.

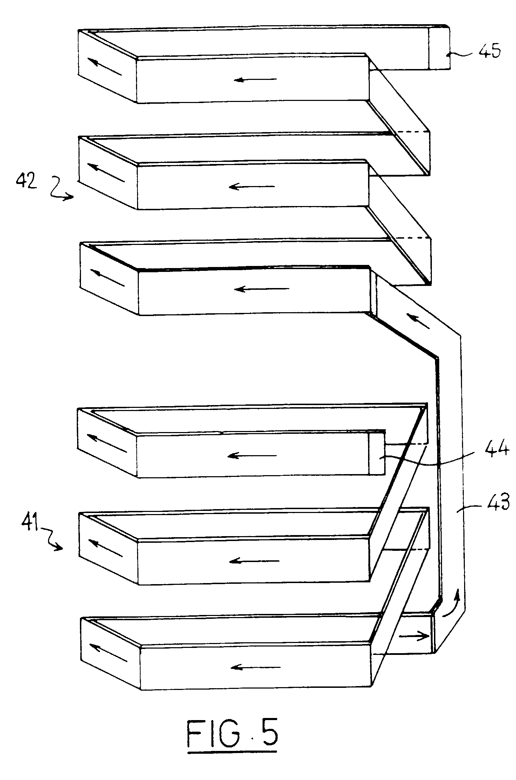

La figure 5 représente le montage série des deux bobines 41 et 42 de la figure 4. La connexion 43 réalisée est faite de manière que les courants inducteurs de chaque bobine tournent dans le même sens et engendrent donc des champs longitudinaux de même direction. Les bornes 44 et 45 sont reliées respectivement aux pôles d'une source de courant alternatif.

Du point de vue électrique, l'inducteur de la figure 8 est équivalent à un inducteur de type classique comportant deux fois le nombre de spires de chaque bobine élémentaire 41 ou 42.

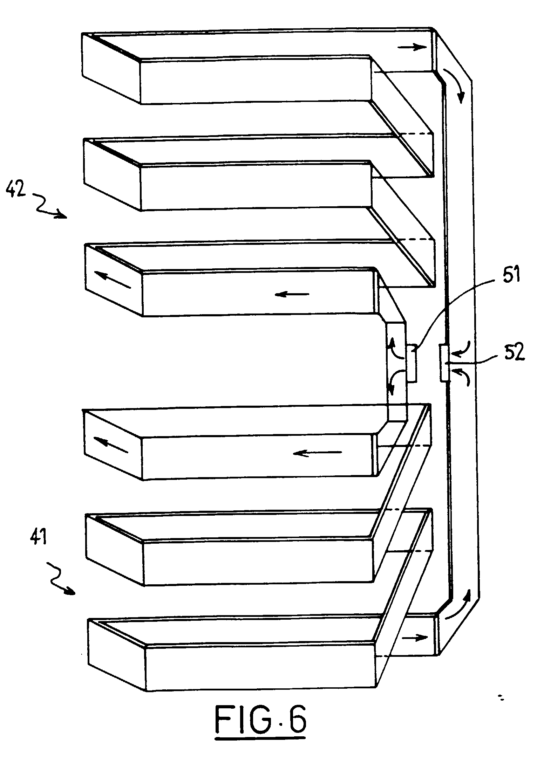

La figure 6 représente un branchement en parallèle des deux bobines de la figure 4. Dans ce cas, on effectue une interconnexion des parties médianes et des parties extrêmes des bobines, les bornes d'alimentation 51 et 52 étant raccordées à l'alimentation en courant alternatif.

Le courant fourni par la source d'alimentation continue se divise en deux courants parcourant chacun une des deux bobines. Pour avoir une efficacité maximale, il y a intérêt à équilibrer les champs créés par chacune des bobines en phase et en amplitude. Dans le cas de bobines réalisées au moyen de bandes conductrices, l'égalité des champs créés par les deux bobines est relativement facile à obtenir. Si cela est nécessaire, dans le cas où les courants des deux bobines sont nettement différents, on peut agir sur la structure d'une bobine en jouant sur le nombre de spires ou la longueur de celles-ci.

Selon une autre variante, on peut utiliser dans chaque bobine 41 et 42 des dispositifs de correction du courant, par exemple des impédances.

On voit que l'invention permet de supprimer les effets néfastes de la composante de champ transversal d'un inducteur de chauffage de type connu. Les différents modes de réalisation de l'invention sont faciles à réaliser et ils permettent d'obtenir un inducteur de chauffage par induction qui peut être utilisé pour tout type de traitement de revêtement, à savoir métallique ou organique.

## Revendications

1. Inducteur (3,4) de chauffage par induction de bandes métalliques (1,31) en défilement en vue d'un traitement thermique ou de revêtement, constitué par une bobine en hélice aplatie, comprenant des spires (11-13,16,17) raccordées entre elles par une connexion oblique (14,18,19) disposée sur un petit côté de la bobine et entourant la bande métallique (1,31) en défilement, caractérisé en ce que la bobine est constituée par des spires formant une double hélice imbriquée et en ce que l'on prévoit des moyens de suppression de la composante transversale du champ magnétique créé par ladite bobine.

2. Inducteur de chauffage selon la revendication 1, caractérisé en ce que les deux hélices constitutives de la bobine sont enroulées en sens inverse l'une par rapport à l'autre, les moyens de suppression de la composante transversale du champ magnétique créé par ladite bobine étant constitués par les connexions obliques (18,19) des spires (16,17), la connexion oblique (18,19) d'une des hélices se croisant avec les connexions obliques (18,19) de l'autre hélice.

3. Inducteur de chauffage selon l'une des revendications 1 et 2, caractérisé en ce que le nombre de spires de la bobine est égal à 4N+1, N étant un nombre entier positif.

## Patentansprüche

1. Induktionsanordnung (3, 4) für die Erwärmung durch Induktion von vorbeilaufenden Metallbändern (1, 13) zum Zwecke einer Wärmebehandlung oder Beschichtung, bestehend aus einer Spule in Form einer abgeflachten Helix, die Windungen (11 - 13, 16, 17) enthält, welche mit Hilfe einer Schrägverbindung (14, 18, 19) untereinander verbunden sind, die an der kurzen Seite der Spule angeordnet ist und das vorbeilaufenden Metallband (1, 13) umgibt,
**dadurch gekennzeichnet, daß**
de Spule aus Windungen besteht, welche eine doppelte verschachtetlte Helix bilden, und dadurch, daß Mittel für die Unterdrückung der Querkomponente des Magnetfeldes vorgesehen sind, das von der Spule erzeugt wird.

2. Induktionsanordnung nach Anspruch 1,
**dadurch gekennzeichnet, daß**
die die Spule bildenden beiden Helices in einander entgegengesetzter Richtung gewickelt sind, und die Mittel für die Unterdrückung der Querkomponente des von der Spule erzeugten Magnetfeldes aus Schrägverbindungen (18, 19) der Windungen (16, 17) bestehen, und daß sich die Schrägverbindung (18, 19) einer der Helices mit den Schrägverbindungen (18, 19) der anderen Helix kreuzt.

3. Induktionsanordnung nach einem der Ansprüche 1 oder 2,
**dadurch gekennzeichnet, daß**
die Zahl der Windungen der Spule gleich 4N + 1 ist, wobei N eine ganze positive Zahl darstellt.

## Claims

1. Inductor (3, 4) for heating by induction metal strips (1, 31) passing through for thermal treatment or coating, formed by a flat spiral coil, comprising windings (11-13, 16, 17) joined to one another by an oblique connection (14, 18, 19) disposed on a short side of the coil and surrounding the metal strip (1, 31) passing through, characterised in that the coil is formed by windings forming an overlapping double helix, and that means are provided to suppress the transverse component of the magnetic field created by said coil.

2. Heat inductor according to Claim 1, characterised in that the two helixes forming the coil are wound in contrary direction to one another, the means of suppressing the transverse component of the magnetic field created by said coil being formed by the oblique connections (18, 19) of the windings (16, 17), the oblique connection (18, 19) of one of the helixes intersecting with the oblique connections (18, 19) of the other helix.

3. Heat inductor according to one of Claims 1 and 2, characterised in that the number of windings of the coil is equal to 4N+1, N being a positive whole number.
